# DEMANDE DE BREVET EUROPEEN

(11) **EP 1 486 470 A1**
(43) Date de publication de la demande: **15.12.2004**
(21) Numéro de dépôt: 03447300.9
(22) Date de dépôt: 22.12.2003
(51) Int. Cl.: C04B 28/12, C04B 18/26, C04B 20/00

(54) **Système de construction multi-usages et multi-fonctionnel avec béton structurel léger à base de sciure de bois**

(30) Priorité: 11.06.2003 RO 200300512
(71) Demandeur: Teleman, Petrache, 1190 Bruxelles (BE)
(72) Inventeur: Teleman, Petrache, 1190 Bruxelles (BE)

(57) **Abrégé**

L'invention se réfère à un système de construction avec des bétons légers confectionnés avec un agrégat de base que sont les fibres de bois et 2 liants que sont le ciment Portland gris et/ou blanc et la chaux vive éteinte en pâte, la synergie crée entre ces 2 liants permettant l'obtention de bétons légers multi fonctionnels et multi usages définis par les classes de produits S (strong), M (médium) et L (light), l'ensemble de ces produits permettant la construction de la quasi-totalité des éléments constitutifs du gros oeuvre des bâtiments civils et/ou industriels, en milieu urbain et/ou agricole.

## Description

### Domaine technique auquel l'invention se rapporte:

L'invention concerne **un système de construction a base de bétons légers structurels confectionnés avec 2 liants que sont le ciment Portland et la chaux vive éteinte en pâte et des fibres de bois,** se rapportant au domaine des constructions résidentielles et /ou non résidentielles en milieu urbain et/ou rural telles que logements individuels et/ou collectifs, hôpitaux, écoles, bureaux, constructions socioculturelles, constructions utilitaires agricoles et autres.

### Etat de la technique auquel l'invention se rapporte :

Dans l'état actuel de la technique des constructions, on peut distinguer 3 grandes catégories de bétons a savoir : **les bétons courants** confectionnés avec du ciment Portland et des agrégats tels le sable et le gravier, **les bétons a haute résistance** ainsi que l**es bétons légers**.

Le béton auquel se rapporte la présente invention fait partie de la catégorie des **bétons légers**. Dans cette catégorie de bétons, on trouve des différents produits tels que le béton cellulaire, les bétons à base de granulés d'argile expansée au four, des bétons avec d'autres agrégats légers tel que la vermiculite, les granulés de polystyrène et autres.

La caractéristique essentielle de ces bétons réside dans le fait qu'ils sont confectionnés avec un seul liant qu'est le ciment Portland et un agrégat qu'est le sable.

Dans cette catégorie de bétons légers on trouve actuellement aussi des bétons constitués avec du ciment Portland, sable et fibres de bois.

Avec ce dernier type de bétons légers, on a confectionné des panneaux d'isolation thermique (placés par exemple dans les coffrages pour couper les ponts thermiques), des chapes isolantes et même des blocs de maçonnerie.

Des essais ont été faits pour réaliser des dalles de structure portante avec des bétons a base de fibres de bois ciment Portland et sable.

Toutes ces applications sont restées faiblement utilisées à l'exception des panneaux d'isolation thermique, la cause étant le fait que ces bétons sont poreux, très perméables à l'eau et difficiles a mettre en oeuvre du fait d'un manque réel de plasticité.

Leur perméabilité à l'eau, annule de fait leur qualité d'isolant thermique et conduit au risque de pourrissement, tandis que la faible plasticité de ces bétons crée des difficultés d'exécution sur des chantiers et que l'augmentation éventuelle de la quantité de ciment Portland, conduit à la diminution de la perméabilité à l'air et donc aussi, au risque de pourrissement des fibres de bois.

A ces aspects il faut ajouter aussi le fait que les bétons confectionnés a base de fibres de bois, ciment Portland et sable ont des faibles performances en ce que concerne la résistance caractéristique en compression.

Un autre type de béton léger structurel est décrit dans la demande de brevet européen sous la référence **EP 1 338 578 A1.**

Ce brevet **préconise l'utilisation simultanée de 2 liants que sont le ciment Portland** **gris ou blanc et la chaux vive éteinte en pâte, auxquels, il ajoute 2 agrégats naturels que sont les granulés d'argile expansés au four et les granulés de liège non torréfiés,** a cette composition de base pouvant être ajoutés, de manière non exhaustive, d'autres agrégats légers, ainsi que des adjuvants divers en fonction des performances physico mécaniques qu'on souhaite obtenir.

Ainsi, dans la demande de brevet EP 1338 578 A1, il est spécifié qu'on peut ajouter aux agrégats légers de base que sont les granulés d'argile expansée au four et les granulés de liège non torréfiés, d'autres agrégats légers,tels que les fibres de bois.

En partant de la demande de brevet EP 1 338 578 A1, l'auteur de la présente invention préconise **l'utilisation des fibres de bois (sciure de bois principalement) en tant qu'agrégat de base** dans les bétons légers structurels confectionnés avec les 2 liants que sont le ciment Portland et la chaux vive éteinte en pâte, étant entendu qu'aux bétons ainsi confectionnés, on peut ajouter d'autres agrégats légers tel que les granulés d'argile expansée au four, les granulés de liège non torréfiés ainsi que des adjuvants divers pour améliorer les performances mécaniques et/ou physiques de ces bétons.

### Problème technique a résoudre :

**La présente invention se propose de résoudre les inconvénients et les défaux des bétons n'utilisant les fibres de bois qu'avec un seul liant qu'est le ciment Portland et permettre ainsi, l'utilisation des bétons auxquels se réfère la présente invention, à l'exécution de l'ensemble des éléments constitutifs du gros oeuvre d'un bâtiment.**

### Objet et description du brevet d'invention :

Le présent brevet d'invention concerne la réalisation de bétons légers structurels **confectionnés avec 2 liants que sont le ciment Portland et la chaux vive éteinte en en pâte et un agrégat de base qu'est la sciure de bois**, auquel on peut ajouter d'autres agrégats légers comme les granulés d'argile expansée au four, les granulés de liège non torréfiés, de la vermiculite, des granulés de polystyrène et autres agrégats, ainsi que des des adjuvants divers fonction de ce qu'on souhaite obtenir en terme de performances mécaniques et/ou physiques, l'utilisation des agrégats lourds tel que le sable étant compatible avec le présent brevet d'invention, mais ni souhaitable et ni nécessaire.

Le présent brevet d'invention solutionne les problèmes rencontrés dans l'état actuel de la confection des bétons a base de fibres de bois, a savoir : grande perméabilité à l'eau, faibles performances mécaniques, mauvaise lucrabilité et perte des qualités d'isolant thermique provoquée par l'absorption excessive de l'eau et danger de pourrissement des fibres de bois incorporées dans ces bétons.

Ainsi, les bétons dont se réfère la présente invention, grâce à leur composition de base comprenant 2 liants que sont le ciment Portland et la chaux vive éteinte en pâte et l'agrégat léger que sont les fibres de bois, ont des performances mécaniques tel que des résistances caractéristiques en compression comprises entre 5 et 20 N/mm², une adhérence des barres d'acier dans le béton comprise entre 4 et 5 N/mm², des résistances en traction par flexion comprises entre 1.0 et 2.2 N/mm², présentent une faible perméabilité à l'eau, une perméabilité à l'air remarquable, des capacités d'isolation thermiques correspondant à des valeurs de coefficients de transmission thermiques comprises entre 0.14 et 0.25 W/mK et une très grande plasticité rendant la mise en place très aisée dans les coffrages et/ou moules soit sur le chantier soit en usine de préfabrication, en ce qu'il **est spécifié aussi que l'ajout** d'autres agrégats légers tels que les granulés d'argile expansée au four, ou des granulés de liège non torréfiés, de même que d'autres agrégats légers tel que, par exemple, les granulés de vermiculite et/ou de polystyrène et /ou d'un agrégat lourd tel que le sable, ainsi que l'ajout ou non, des adjuvants divers pour la modification du temps de prise, de la plasticité et/ou pour réduire d'avantage la perméabilité à l'eau, dans le but d'accroître et/ou modifier les performances obtenues par la composition de base des bétons faisant l'objet de la présente invention, est parfaitement compatible avec l'objet de la présente invention et constitue une extension possible et faisant partie intégrante de la présente invention.

En ce qu'il est spécifié que l'utilisation simultanée dans la composition des bétons légers **de 2 liants que sont le ciment Portland gris et/ou blanc et la chaux vive éteinte en pâte à pour conséquence une synergie avec des effets inattendus** dans le sens que le ciment Portland joue le rôle du liant principal conférant aux bétons dont se réfère la présente invention, les caractéristiques physico mécaniques de base telles que la résistance caractéristique en compression, la résistance en traction, le module d'élasticité tandis que la chaux vive éteinte en pâte intervient pas seulement comme un deuxième liant, mais en plus elle confère aux bétons dont s'occupe la présente invention, des propriétés exceptionnelles en terme de plasticité, résistance au feu, qualités bactéricides, réduction importante du facteur eau/ciment, perméabilité à l'air, tout en diminuant la perméabilité à l'eau et par-là, la diminution importante du risque de pourrissement des fibres de bois intégrés dans ces bétons et par conséquent tout ceci permet la mise au point d'un **système intégré de construction en gros** oeuvre, **couvrant la quasi-totalité des éléments formant le gros oeuvre d'un bâtiment : éléments de stabilité, murs porteurs et/ ou non porteurs, cloisons, protections au feu et autres.**

Etant entendu que le remplacement de la chaux vive éteinte en pâte par de la chaux deshydratée est compatible avec l' invention, en conférant toujours aux bétons auxquels se réfère la présente invention les propriétés apportées à ces bétons par la chaux, sauf le fait que la chaux déshydratée en poudre n'est plus un liant et que l'utilisation de la chaux vive en poudre (non hydratée) en remplacement de la chaux vive éteinte en pâte conserve des qualités de liant, mais celles-ci sont fortement diminués du fait de la hydratation de cette chaux en contact avec l'air durant les manipulations de manutention et de stockage et que neanmoins,cette qualité de chaux fait partie aussi,des spécifications de la présente invention.

En ce qu'il est spécifié aussi que par les multiples qualités conférées aux bétons auxquels se réfère la présente invention par l'ajout de la chaux que ce soit sous forme de chaux vive éteinte en pâte, et/ou chaux vive en poudre, et/ou de la chaux déshydratée en poudre et du fait de la présence des fibres de bois en tant qu'agrégats, l'ensemble de ces qualités et caractéristiques confèrent aux bétons dont s'occupe la présente invention des qualités certifiables de bétons eminament écologiques.

En ce qu'il est spécifié aussi que le fait que les bétons dont s'occupe la présente invention utilisent un agrégat léger de base que sont les fibres de bois, auxquels on peut ajouter d'autres agrégats légers et qu'ainsi on obtient des bétons ayant un poids spécifique à sec compris, suivant les compositions, entre 1000 et 1450kg. et que ce fait détermine toute une série d'avantages supplémentaires tels que la réduction des frais de transport et manutention tant dans l'usine da fabrication que sur le chantier en améliorant les conditions de travail des ouvriers, ainsi qu'une réduction du coût des coffrages sur place.

En ce qu'il est spécifié aussi que le remplacement des agrégats « lourds » tel que le sable et le gravier dans la composition des bétons dont s'occupe la présente invention rend faciles des opérations telles que le sciage, le clouage, et le boulonnage des éléments confectionnés avec des bétons dont s'occupe la présente invention.

En ce qu'il est spécifié que les bétons dont s'occupe la présente invention sont **multi fonctionnels par le fait que par de différentes combinaisons en volume et/ou en poids entre les 2 liants que sont le ciment Portland et la chaux vive en en pâte d'un coté, et le volume et/ou le poids des fibres de bois utilisés comme agrégat de base dans la composition de ces bétons,** on peut obtenir des bétons ayant des fonctions avec des caractéristiques prioritaires, dans le sens que en augmentant la quantité de ciment Portland par rapport à la quantité de chaux on obtient des bétons avec des capacités de résistance en compression accrues, de même qu'en augmentant la quantité de chaux au détriment de la quantité de ciment Portland on obtiendra des bétons avec une **fonction prioritaire** d'isolation thermique et/ou acoustique et de résistance au feu et que donc, de cette manière, on peut obtenir de ce fait, des bétons avec des fonctions prioritaires différentes telles que :
- des fonctions de priorité pour les résistances mécaniques à obtenir,
- des fonctions de priorité pour les capacités d'isolation thermique et/ou acoustiques
- des fonctions de priorité pour la protection et/ou la résistance au feu
- des fonctions avec des combinaisons entre les priorités ci-dessus.

En ce que la possibilité d'obtenir des bétons ayant des fonctionnalités différentes, rends possible un nombre quasi illimité **d'utilisations (usages) des bétons définis par la présente invention à savoir :**
- éléments de stabilité (dalles, poutres, colonnes, voiles) coulés sur le chantier
- éléments de stabilité (hourdis, prédalles, colonnes, poutres, voiles) préfabriqués.
- blocs pour des maçonneries portantes et/o non portantes, armées ou non armées.
- plaques et éléments de remplissage de toiture.
- cloisons
- éléments coupe-feu et/ou de séparation entre locaux.
- éléments décoratifs.

### Classification des bétons dont s'occupe la présente invention et exemples d'application.

Les bétons dont s'occupe la présente invention peuvent être confectionnes soit en usine de préfabrication, soit sur le chantier. la formule de leur composition étant déterminée par la fonction prioritaire qu'on souhaite obtenir.

Lors de la fabrication en usine et/ou sur le chantier des bétons dont se réfère la présente invention, le dosage en ciment Portland, chaux vive éteinte en pâte ainsi que l'agrégat de base constitué par les fibres en bois, se fera soit en poids soit a base volumétrique, tout en sachant que le dosage volumétrique est moins précis que le dosage en poids, mais dans tous le cas, **il est obligatoire de n'utiliser que des fibres** de bois séchées suivant les normes spécifiques concernant l'humidité rémanente acceptable dans ces fibres (moins que 16%).

Pour pouvoir donner des exemples de formules de fabrication des bétons dont s'occupe la présente invention, son auteur a préconisé et testé plusieurs combinaisons entre les 2 liants et l'agrégat de base qui sont les fibres de bois.

Ces recherches on conduit à classification des bétons dont s'occupe la présente invention en 3 grandes catégories de produits comme il est spécifié ci-dessous :
**a) Bétons de classe S** (strong) : bétons avec priorité donnée à la résistance en compression.
**b) Bétons de classe M** (medium) : équilibre entre la résistance en compression et les fonctions d'isolation thermique et/ou acoustique.
**c) Bétons de classe L** (light) : bétons avec une fonction prioritaire d'isolation thermique et/ou acoustique.

Etant spécifié qu' à l'intérieur de chaque classe, il y a la possibilité d'une multitude de variations quantitatives entre les components de base des bétons faisant l'objet de la présente invention, mais qui doivent, bien entendu rester cohérentes avec la classe de produits à laquelle ces produits appartiennent (classes S, M , et L).

Ainsi, si l'on souhaite obtenir un béton dont s'occupe la présente invention avec des fonctions prioritaires bien définies, on peut utiliser les formules suivantes :

| | |
|---|---|
| Béton classe S (strong) | 6 volumes fibres de bois |
| | 2 volumes ciment gris (ou blanc) 42.5 |
| | 1 volume chaux vive éteinte en pâte |
| | 1 à 1.25 volumes eau. |
| | |
| Béton classe M (médium) | 6 volumes fibres bois |
| | 1.5 volumes ciment gris (ou blanc) 42.5 |
| | 1.5 volumes chaux vive éteinte en pâte |
| | 1 volume eau |
| | |
| Béton classe L (light) | 6 volumes fibres de bois |
| | 1 volume ciment gris (ou blanc) 42.5 |
| | 2 volumes chaux vive éteinte en pâte. |
| | 0.75 à 1.0 volume eau. |

En ce qu'il est expressément spécifié que les formules de fabrication ci-dessus, ne constituent que des exemples d'application et que les possibilités de formulation de composition des bétons à l'intérieur de chaque classe de produits sont quasi-illimitées et que ceci fait partie intégrante de la présente invention, la seule limite dans les formules de fabrication étant les limites imposées par la pratique.

## Revendications

1. Système de construction avec des bétons légers a base de fibres de bois **caractérisé par le fait qu'il utilise** simultanément 2 liants que sont le ciment Portland et la chaux vive éteinte en pâte et que par la modification des proportions entre les 2 liants, on peut créer une gamme extrêmement large de produits dérivés en béton permettant l'exécution quasi complète du gros oeuvre des bâtiments en milieu urbain et/ou rural, dans le sens qu'avec ces bétons on peut réaliser des éléments de structure portante (parois, colonnes, poutres, dalles, maçonneries portantes armées ou non armées) maçonneries pour des parois non portantes, cloisons acoustiques et/ou d'isolation thermique, ainsi que la protection contre le le feu, dans le sens aussi que l'ensemble de ces applications, confère aux bétons dont s'occupe la présente invention, des caractéristiques de bétons multi usages et multi fonctions, en ce que aussi, il est spécifié qu'il est possible d'y ajouter a la composition de base constituée par les fibres de bois et les 2 liants que sont le ciment Portland et la chaux vive éteinte en pâte, d'autres agrégats légers comme par exemple, des granulés d'argile expansées au fur, des granulés de liège non-torrefiés, des granulés de vermiculite et/ou de polystyrène, ainsi que des adjuvants les plus divers tels que la fumée de silice, des adjuvants tels que des accélérateurs ou de retardateurs de prise, des anti-gels et autres, cette liste n'étant pas exhaustive, la seule limite étant la compatibilité physique avec les composants de base des bétons dont s'occupe la présente invention.

2. Composition de bétons conformément à la revendication principale 1, **se caractérisant par le fait que** par la modification du rapport quantitatif entre le ciment Portland et la chaux vive éteinte en pâte, en faveur du ciment Portland, on obtient la classe de produits de type S (strong) permettant la réalisation des éléments porteurs d'un bâtiment construit sur la base des bétons dont se réfère la présente invention tel que : colonnes, poutres, dalles, voiles e.a. étant explicitement spécifié que la classe de type S donne priorité aux fonctions de résistance caractéristique en compression, les fonctions d'isolation thermique et/ou d'isolation acoustique et de protection au feu, revêtant d'une importance secondaire.

3. Composition de bétons conformément à la revendication principale 1 **se caractérisant par le fait que** des proportions quantitatives quasi égales entre le ciment Portland et la chaux vive éteinte en pâte permet l'obtention de la classe de produits de type M (médium) de bétons confectionnés suivant la présente invention, dans le sens que les produits appartenant a cette classe étant définis comme ayant des fonctions de résistance en compression équivalentes en importance avec la fonction d'isolation thermique et /ou acoustique, dans cette classe s'inscrivant les blocs de maçonnerie portantes plus faiblement sollicitées, intérieures et/ou extérieures, de même que d'autres éléments du bâtiment, tels que des parois (voiles) intérieurs et/ou extérieurs préfabriqués en usine et/ou coulées sur le chantier.

4. Composition de bétons conformément à la revendication principale **se caractérisant par le fait que** l'adoption d'un rapport quantitatif entre le ciment Portland et la chaux vive éteinte en pâte, favorable à la chaux vive éteinte en pâte, permet l'obtention de la classe de produits de type L (light),
la caractéristique de base de ces produits en béton dont s'occupe la présente invention, étant **le fait que** les fonctions d'isolation thermique et/ou acoustique, de même que la fonction de protection contre le feu, sont prioritaires par rapport à la fonction de résistance en compression, de sorte que dans cette classe de produits on trouvera les parois et cloisons non portants, les cloisons et les produits d'isolation thermique et/ou acoustiques exécutés en usine et/ou sur le chantier sous la forme de blocs et/ou des panneaux ou des plaques et que ces produits peuvent être utilisés comme protections contre le feu des structures métalliques et/ou en béton normal, par des éléments finis et /ou humides comme par exemple par projection.

5. Composition de bétons conformément à la revendication principale 1 **se caractérisant par le fait qu'**en fonction **de résultats qu'on veut obtenir** il est parfaitement possible de remplacer le ciment Portland classe 42.5 par des ciments Portland de classe inférieure 32.5 et/ou supérieure 52.5, la possibilité d'utilisation de toutes clases de ciment Portland faisant partie intégrante du présent brevet d'invention

6. Composition de bétons conformément à la revendication principale 1 et aux revendications dépendantes 2, 3, et 4, **se caractérisant par le fait que** par l'étendue des applications possibles, les bétons auxquels se réfère la présente invention sont multi fonctionnels et multi usages et constituent un système intégré de construction du gros oeuvre complet d'une construction.

7. Composition de bétons conformément à la revendication principale 1 et aux revendications secondaires 3 et respectivement 4, **se caractérisant par le fait que**, par l'utilisation du ciment Portland blanc en lieu et place du ciment gris on peut obtenir des bétons auxquels se réfère la présente invention de la classe M (cf.3) et ou de la classe L (cf.4) avec des applications de bétons architecturaux, coloriés ou non coloriés dans la masse.
